# EUROPÄISCHE PATENTSCHRIFT

(11) **EP 2 539 047 B1**
(45) Veröffentlichungstag und Bekanntmachung des Hinweises auf die Patenterteilung: **13.06.2018**
(21) Anmeldenummer: 11720283.8
(22) Anmeldetag: 18.02.2011
(51) Int. Cl.: B01D 53/26, B01D 45/08

(54) **ROHR UND KONDENSATRANDFILMAUFFANG- UND -ABLEITVORRICHTUNG ZUM EINBAU IN DIESES**
PIPE AND CONDENSATE BOUNDARY FILM COLLECTION AND DRAINAGE DEVICE FOR INSTALLATION IN SAID PIPE
CONDUIT ET DISPOSITIF DE COLLECTE ET D'ÉVACUATION D'UN FILM MARGINAL DE CONDENSAT À IMPLANTER DANS LE CONDUIT

(30) Priorität: 23.02.2010 DE 102010008949
(43) Veröffentlichungstag der Anmeldung: 02.01.2013
(73) Patentinhaber: Munters Euroform GmbH, 52068 Aachen (DE)
(72) Erfinder: JANSEN, Matthias, 52223 Stolberg (DE)
(74) Vertreter: Hauck Patentanwaltspartnerschaft mbB
(86) Internationale Anmeldenummer: PCT/DE2011/000160
(87) Internationale Veröffentlichungsnummer: WO 2011/103858

(56) Entgegenhaltungen:
- EP-A1- 1 911 502
- DE-A1- 2 338 913
- DE-A1- 3 711 413
- DE-A1-102004 058 700
- DE-B- 1 080 521
- DE-T2- 60 038 438
- FR-A- 660 282
- JP-A- H03 157 113
- US-A1- 2008 110 140

## Beschreibung

Die vorliegende Erfindung betrifft ein Rohr zur Durchführung oder Abführung von nassen Gasen, insbesondere zur Durchführung oder Abführung von einer Nasswäschung unterzogenen Rauchgasen, mit einer Kondensatrandfilmauffang- und - ableitvorrichtung, die ein im Bereich des Innenrandes des Rohres angeordnetes Trennelement zur Abtrennung eines Teilgasstromes von dem das Rohr durchströmenden Gasstrom und eine zugehörige Kondensatabführvorrichtung aufweist.

Die vorliegende Erfindung bezieht sich ferner auf eine Kondensatrandfilmauffang- und -ableitvorrichtung zum Einbau in ein Rohr zur Durchführung oder Abführung von nassen Gasen.

Bei der Durchführung oder Abführung von nassen Gasen durch Rohre bildet sich durch den Kontakt des Gasstromes mit der relativ kalten Rohrwandung Kondensat, das in der Form eines Kondensatrandfilmes auf der Rohrinnenwand anfällt. Dieser Kondensatrandfilm wird durch die Bewegung des Gasstromes bis zur Rohrmündung mitgeführt bzw. mitgerissen und zusammen mit dem Gasstrom aus dem Rohr herausgeführt und in der Form von Flüssigkeitstropfen, Nebel etc. (in die Atmosphäre) abgegeben. Dies ist natürlich unerwünscht, und es sind bereits entsprechende Gegenmaßnahmen eingeleitet worden.

Hinter Nasswäschern, beispielsweise Nasswäschern von Rauchgasen, hat man bislang vermehrt Wiederaufheizeinrichtungen in der Form von Wärmetauschern oder durch Direkteinbringungen von Energie mittels Gasbrennern eingesetzt, um das nasse Gas durch bis zu 400 m hohe Großkamine zu fördern, ohne hierbei übermäßig viel Kondensat zu erzeugen. Auf diese Weise sollte insbesondere der Auswurf von groben Tropfen aus dem Kamin, welche in unmittelbarer Nähe des Kamins zu Boden fallen, verhindert werden. Diese Einrichtungen sind jedoch sehr kostspielig und wartungsintensiv oder benötigen einen hohen Energieaufwand.

Moderne Anlagen hat man deshalb mit sogenannten Nasskaminen ausgerüstet, die etwa 250 m hoch sind. Die Gasförderung erfolgt hierbei mit Hilfe von Druckerhöhungsgebläsen vor oder hinter dem Nasswäscher. Bedingt durch die Abkühlung des feuchten Gases auf dem Weg zum Kaminaustritt kommt es jedoch auch hierbei zu einem hohen Kondensatanfall innerhalb des Kamins und daher zum Auswurf von groben Tropfen aus dem Kamin, welche in unmittelbarer Nähe des Kamins zu Boden fallen. Bisher wurden außer einfachen Drainageeinrichtungen nur in wenigen Fällen Einbauten, wie beispielsweise Axialzyklone, in die Großkamine eingebaut, da diese aufgrund der hohen Geschwindigkeiten im Kamin zu sehr hohen Energieverlusten führen und auch bisher keine zufriedenstellende Lösung hinsichtlich der Tropfenabführung darstellen.

Ferner hat man zur Verringerung des Tropfenauswurfs in vielen Nasskaminen sogenannte Filmfallen oder andere Schikanen eingebaut, die das Mitschleppen von Flüssigkeitsfilmen entlang der Kaminwand verhindern sollen. Diese Maßnahmen sind jedoch in der Regel nur bedingt brauchbar, da durch die hohen Gasgeschwindigkeiten in solchen Kaminen der Flüssigkeitsfilm mitgerissen wird oder Tropfen aus dem Film herausgerissen werden. Ein schädlicher Tropfenauswurf lässt sich daher auch mit diesen Einrichtungen nicht vollständig verhindern.

Eine weitere Gegenmaßnahme besteht darin, dass man solche Nasskamine mit Kondensatrandfilmauffang- und -ableit-vorrichtungen ausgerüstet hat. Diese Vorrichtungen sind an den Mündungen der Nasskamine angeordnet und bewirken eine Abtrennung eines Teilgasstromes von dem den Nasskamin durchströmenden Gasstrom, wobei dieser Teilgasstrom den gebildeten Kondensatrandfilm mitführen und somit vom Hauptgasstrom im mittleren Bereich des Kamins abtrennen soll. Das sich dann vom Teilgasstrom abscheidende Kondensat wird aufgefangen und über eine Kondensatabführvorrichtung abgeführt. Diese bekannten Kondensatrandfilmauffang- und -ableit-vorrichtungen bzw. "Randfilmfallen" sind jedoch insofern mit Problemen verbunden, als dass die Menge der Flüssigkeit, die in die Randfilmauffang- und -ableitvorrichtung hineingeführt wird, sehr stark abhängig ist von der Führung der Gasströmung zu der Vorrichtung und in die Vorrichtung. Da die vom Teilgasstrom durchströmte Bahn in der Kondensatrandfilmauffang- und -ableitvor-richtung im Vergleich zum Rohrdurchmesser nur eine geringe Breite besitzt, kann sich in diesem Bereich eine Gasstauzone bilden, wodurch die zur Kondensatabführung erforderliche Minimalgeschwindigkeit unterschritten wird, so dass der Kondensatrandfilm zumindest nicht vollständig vom Teilgasstrom mitgeführt wird, sondern zumindest zum Teil an der Randfilmfalle vorbei mit dem zentralen Gasstrom aus dem Nasskamin heraus nach außen gefördert wird, so dass die vorgesehene Randfilmfalle nur teilweise oder überhaupt nicht wirksam wird. Dieser "Staueffekt" wird noch durch kleine Austrittsöffnungen des Gasstromes aus der Randfilmfalle oder durch Mehrfachumlenkungen des Gasstromes in dieser verstärkt. Trotz der Anordnung von derartigen Kondensatrandfilmauffang- und -ableitvorrichtungen bzw. Randfilmfallen wird daher noch ein nicht unbeträchtlicher Teil des Randfilmes vom zentralen Gasstrom mitgerissen und in die Atmosphäre in der Form von Tropfen, Nebel etc. abgegeben.

Aus der US-A-2008/0110140 ist ein Rohr der eingangs beschriebenen Art bekannt. Bei dem bekannten Rohr sind Trennelement und Rohrwandung identisch, und der vorgesehene ringförmige Tropfenabscheider ist direkt benachbart zum Trennelement radial außerhalb desselben angeordnet.

Aus der DE-A-1080521 ist ein Rohr zur Durchführung oder Abführung von nassen Gasen bekannt, in dem längliche Abteile oder Behälter angeordnet sind, welche jeweils eine Vielzahl von Metallrohren enthalten. Ein Teil des durch das Rohr strömenden Dampfes strömt hierbei durch die Abteile, in denen er gekühlt und zum Teil durch die Metallrohre abgelenkt wird.

Aus der DE 10 2009 016 643 A1 ist ein Rohr zur Durchführung oder Abführung von nassen Gasen bekannt, das in seiner Innenwand ein schraubenförmig ausgebildetes Leitelement aufweist. Durch diese Ausgestaltung wird die Tropfenmitführung bzw. der Tropfenauswurf des Rohres verringert.

Beim Gegenstand der FR 660 282 sind auf der Außenseite von Rohrkrümmungen Einrichtungen vorgesehen, die eine Kondensatfalle bilden. Das dort aufgefangene Kondensat wird über Abführeinrichtungen aus dem Rohr herausgeführt.

Die DE 600 38 438 T2 beschreibt ein Rohr zu Durchführung oder Abführung von nassen Gasen, das einen Ringraum aufweist, der sich in Gasströmungsrichtung erweitert. Ein Tropfenabscheider ist hierbei nicht vorgesehen.

Die JP H03 157113 A offenbart ein Rohr zur Durchführung oder Abführung von nassen Gasen, das ebenfalls einen Ringraum besitzt, der sich in Gasströmungsrichtung erweitert. In diesem Bereich werden Wassertropfen eingefangen und aus dem Rohr entfernt. Hierzu finden aber keine Tropfenabscheiderlamellen Verwendung, die Teile eines Ringabscheiders bilden.

Die DE 23 38 913 A1 beschreibt eine Vorrichtung zum Abscheiden von Flüssigkeitsfilmen, Tropfen und Stäuben aus Rohrströmungen, bei der ein ringförmiger Schälschlitz in einem Rohr mit einer Querschnittsverengung angeordnet ist, wobei der ringförmige Schälschlitz auf eine ringförmige Prallfläche führt, die in Verbindung mit einer Abscheidekammer steht.

Der vorliegenden Erfindung liegt die Aufgabe zugrunde, ein Rohr zur Durchführung oder Abführung von nassen Gasen vorzusehen, das eine besonders wirksame Kondensatrandfilmauffang- und -ableitvorrichtung aufweist.

Diese Aufgabe wird erfindungsgemäß durch ein Rohr gemäß Patentanspruch 1 gelöst.

Mit der erfindungsgemäßen Lösung werden die vorstehend aufgezeigten Nachteile des Standes der Technik vermieden. Durch die Anordnung eines Tropfenabscheiders muss keine Verengung bzw. Umlenkung des in der Kondensatrandfilmauffang- und -ableitvorrichtung angeordneten Strömungskanals stattfinden, um das Kondensat abzuleiten. Vielmehr ist der erfindungsgemäß vorgesehene Ringabscheider hinter dem durch das Trennelement gebildeten Ringraum angeordnet und erstreckt sich über den gesamten Ringraum, so dass der gesamte Querschnitt des Ringraumes vom Tropfenabscheider abgedeckt wird und vom Teilgasstrom durchströmt wird. In Bezug auf den Teilgasstrom existiert daher eine relativ breite Strömungsbahn, so dass die für eine effektive Tropfenabscheidung erforderliche Minimalströmungsgeschwindigkeit aufrechterhalten werden kann. Es findet im Wesentlichen kein ausgeprägter Staueffekt vor dem Eintritt in die Kondensatrandfilmauffang- und -ableitvor-richtung statt, so dass der Randfilm auf effektive Weise abgelöst und vom Teilgasstrom mitgeführt werden kann, ohne dass ein Teil des Randfilmes in den Hauptgasstrom gelangt.

Der Tropfenabscheider ist als Ringabscheider mit einer Vielzahl von Lamellen ausgebildet und hinter dem vom Teilgasstrom durchströmten Ringraum innerhalb der Kondensatrandfilmauffang- und -ableitvorrichtung angeordnet.

Die Kondensatauffang- und -ableitvorrichtung weist speziell einen zwischen Trennelement und Rohrwandung ausgebildeten Ringraum auf, der sich in Gasströmungsrichtung zu einem größeren Ringraum erweitert, an dessen Ende der Tropfenabscheider (Ringabscheider) angeordnet ist.

Vorzugsweise wird der Teilgasstrom ohne Umlenkung aus dem Rohr geleitet und passiert hierbei den erfindungsgemäß angeordneten Ringabscheider. Der Teilgasstrom wird daher bei dieser Ausführungsform im Wesentlichen parallel zum Hauptgasstrom geführt. Die Erfindung sieht jedoch auch eine Ausführungsform vor, bei der der Teilgasstrom umgelenkt wird, insbesondere etwa um 90°, so dass er das Rohr senkrecht zur Rohrachse verlässt.

In jedem Falle separiert der erfindungsgemäß vorgesehene Ringabscheider die mitgerissene Flüssigkeit des Kondensatrandfilmes vom abgeführten Teilgasstrom und führt diese der zugehörigen Kondensatabführvorrichtung zu, die beispielsweise als gasströmungsfreier Ringkanal ausgebildet sein kann, welcher über Drainageleitungen entwässert werden kann.

Bei einer speziellen Ausführungsform der Erfindung ist die Kondensatrandfilmauffang- und -ableitvorrichtung an der Rohrmündung angeordnet. Generell kann das Rohr vertikal oder horizontal angeordnet sein oder auch jede beliebige Schräglage annehmen. Vorzugsweise ist das Rohr als sogenannter Nasskamin ausgebildet, wobei die Kondensatrandfilmauffang- und -ableitvorrichtung bei der vorstehend beschriebenen Ausführungsform an der Mündung des Nasskamins vorgesehen ist. Hierbei erstreckt sich das Trennelement vorzugsweise über das Rohrende bzw. Kaminende hinaus und bildet zusammen mit einem radial äußeren Begrenzungselement außerhalb der Rohr- bzw. Kaminwand einen Ringraum, der vom Teilgasstrom durchströmt wird und an dessen Austrittsende der Ringabscheider angeordnet ist.

Bei einer anderen Ausführungsform der Erfindung ist die Kondensatrandfilmauffang- und -ableitvorrichtung im Rohrinneren angeordnet. Auch hier bewirkt ein im Rohrinneren angeordnetes Trennelement, das vorzugsweise ringförmig ausgebildet ist, die Abtrennung eines Teilgasstromes im Bereich der Rohrwandung, der den vom Trennelement und der Rohrwandung begrenzten Ringraum durchströmt. Hinter diesem Ringraum ist ein Ringabscheider angeordnet, wobei auch hier die separierte Flüssigkeit vorzugsweise in einen gasströmungsfreien Ringkanal geleitet wird, der über Drainageleitungen entwässert werden kann. Die Kondensatrandfilmauffang- und - ableitvorrichtung befindet sich daher bei dieser Ausführungsform vollständig im Rohrinneren, während sie bei der vorstehend beschriebenen Ausführungsform (Anordnung an der Rohrmündung) teilweise im Rohrinneren und teilweise außerhalb des Rohres angeordnet ist.

Der Ringabscheider ist vorzugsweise so in der Kondensatrandfilmauffang- und -ableitvorrichtung angeordnet, dass er vom abgetrennten Gasstrom (Teilgasstrom) vertikal durchströmt wird. Diese Ausführungsform findet insbesondere dann Verwendung, wenn das Rohr vertikal angeordnet ist, was bei Nasskaminen der Fall ist. Hierbei wird daher der Teilgasstrom nicht umgelenkt und im Wesentlichen parallel zum Hauptgasstrom geführt.

Die Erfindung sieht jedoch auch einen horizontal durchströmten Ringabscheider vor, der insbesondere bei liegend angeordneten Rohren Verwendung findet, jedoch auch bei vertikal angeordneten Rohren, wobei hier der Teilgasstrom um etwa 90° umgelenkt wird.

Wie erwähnt, ist der Ringabscheider so eingebaut, dass er entweder vertikal oder horizontal durchströmt wird.

Bei Anordnung der Kondensatrandfilmauffang- und -ableitvorrichtung im Rohrinneren ist der Ringabscheider zwischen Rohrwandung und Trennelement und bei Anordnung der Kondensatrandfilmauffang- und -ableitvorrichtung an der Rohrmündung zwischen Trennelement und einem Gasströmungsbahnbegrenzungselement angeordnet.

Der Ringabscheider weist eine Vielzahl vom radial angeordneten Tropfenabscheiderlamellen auf, die sich zwischen einer radial inneren und radial äußeren bzw. oberen und unteren Begrenzungswand erstrecken. Bei Einbau des Ringabscheiders derart, dass er vertikal durchströmt wird, sind daher eine radial innere und eine radial äußere Begrenzungswand in Ringform vorhanden, wobei die einzelnen Tropfenabscheiderlamellen vorzugsweise nicht parallel zueinander, sondern radial verlaufend angeordnet sind. Hierbei ist daher der Abstand zwischen den einzelnen Lamellen radial außen größer als radial innen. Die Tropfenabscheiderlamellen können in bekannter Weise ausgebildet sein, d. h. wellenförmig, und mit Fangtaschen versehen sein. Derartige Ausführungsformen sind dem Fachmann bekannt und brauchen daher an dieser Stelle nicht mehr im Einzelnen beschrieben werden.

Bei Einbau des Ringabscheiders derart, dass er horizontal durchströmt wird, sind eine obere und untere Begrenzungswand vorhanden, zwischen denen radial verlaufende Tropfenabscheiderlamellen angeordnet sind. Auch hierbei weisen die Lamellen vorzugsweise radial innen einen geringeren Abstand voneinander auf als radial außen.

Die Kondensatrandfilmauffang- und -ableitvorrichtung besitzt vorzugsweise ferner eine Kondensatauffangwanne mit Abfluss, die zweckmäßigerweise ebenfalls als Ringraum ausgebildet ist und außerhalb der vom Teilgasstrom durchströmten Gasströmungsbahn liegt. Über den Abfluss bzw. eine geeignete Drainage wird die abgeschiedene Flüssigkeit abgeführt. Wesentlich ist, dass die Kondensatauffangwanne bzw. der entsprechende Ringraum im Wesentlichen strömungsfrei ist, damit die abgeschiedene Flüssigkeit nicht wieder vom Gasstrom mitgerissen werden kann.

Bei einer weiteren Ausführungsform der Erfindung ist das Trennelement konisch ausgebildet und verengt sich in Gasströmungsrichtung. Diese Ausführungsform findet insbesondere dann Verwendung, wenn die Kondensatrandfilmauffang- und -ableitvorrichtung innerhalb des Rohres angeordnet ist, um auf diese Weise an der Stelle der Anordnung der Kondensatrandfilmauffang- und -ableitvorrichtung keine abrupte, sondern eine allmähliche Verengung der Strömungsbahn des Hauptgasstromes zu erreichen.

Es versteht sich, dass bei Anordnung einer Kondensatrandfilmauffang- und -ableitvorrichtung innerhalb des Rohres mehrere Vorrichtungen hintereinander angeordnet sein können, so dass sich eine mehrstufige Randfilmauffang- und - ableitvorrichtung ergibt.

Die vorliegende Erfindung betrifft ferner eine Kondensatrandfilmauffang- und -ableitvorrichtung zum Einbau in ein Rohr der vorstehend beschriebenen Art. Eine solche Kondensatrandfilmauffang- und -ableitvorrichtung kann sämtliche der vorstehend wiedergegebenen Merkmale aufweisen. Diese brauchen daher an dieser Stelle nicht mehr im Einzelnen wiederholt zu werden.

Die Erfindung wird nachfolgend anhand von Ausführungsbeispielen in Verbindung mit den Zeichnungen im Einzelnen erläutert. Es zeigen:
- Figur 1: eine schematische Schnittdarstellung der Mündung eines Nasskamins mit einer ersten Ausführungsform einer Kondensatrandfilmauffang- und -ableitvorrichtung;
- Figur 2: eine schematische Schnittdarstellung entsprechend Figur 1 mit einer zweiten Ausführungsform einer Kondensatrandfilmauffang- und -ableitvorrichtung;
- Figur 3: eine schematische Schnittdarstellung eines Teiles eines Nasskamins mit einer weiteren Ausführungsform einer Kondensatrandfilmauffang- und -ableitvorrichtung;
- Figur 4: eine schematische Draufsicht auf einen Teil eines als Ringabscheider ausgebildeten Tropfenabscheiders der Kondensatrandfilmauffang- und -ableitvorrichtung; und
- Figur 5: eine vergrößerte Darstellung eines Teiles des Ringabscheiders der Figur 4.

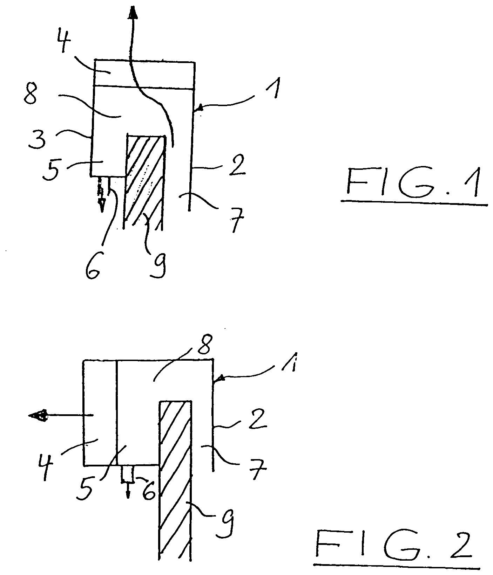

In der schematischen Vertikalschnittdarstellung der Figur 1 ist die Endwand an der Mündung eines Nasskamins mit 9 bezeichnet. An der Mündung des Nasskamins ist eine Kondensatrandfilmauffang- und -ableitvorrichtung 1 schematisch dargestellt. Die Vorrichtung weist ein Trennelement 2 auf, das ringförmig ausgebildet ist und sich von außen in das Innere des Kamins erstreckt. Zwischen Trennelement 2 und Kaminwand 9 wird auf diese Weise ein Ringraum 7 gebildet, der sich zu einem größeren Ringraum 8 erweitert, welcher zwischen einer ringförmigen Begrenzungswand 3 und dem Trennelement 2 gebildet ist. Die Gasströmungsrichtung verläuft in Figur 1 von unten nach oben. In Gasströmungsrichtung hinter dem Ringraum 8 ist ein Tropfenabscheider in der Form eines Ringabscheiders 4 angeordnet, der sich ebenfalls zwischen dem Trennelement 1 und der Begrenzungswand 3 befindet. Unter dem Ringraum 8 befindet sich auf der Außenseite der Kaminwand 9 ein Kondensatauffangringraum 5, der einen Kondensatabfluss 6 aufweist.

Die Kondensatrandfilmauffang- und -ableitvorrichtung 1 funktioniert in der folgenden Weise:
Das im Nasskamin nach oben zur Mündung strömende nasse Gas gelangt zum Trennelement 2 und wird von diesem in einen zentralen Teilgasstrom und einen radial äußeren Teilgasstrom aufgeteilt, der in den Ringraum 7 eindringt. Das an der Innenseite der Kaminwand 9 ausgebildete und vom Gasstrom nach oben mitgeführte Kondensat wird vom gebildeten radial äußeren Teilgasstrom in den Ringraum 7 mitgerissen und gelangt in den breiteren Ringraum 8 und von dort in den dahinter angeordneten Tropfenabscheider 4. Dieser als Ringabscheider ausgebildete Tropfenabscheider weist eine Vielzahl von radial angeordneten wellenförmigen Lamellen mit Fangtaschen auf. Das im Teilgasstrom mitgeführte Kondensat wird beim Passieren des Ringabscheiders abgeschieden und gelangt durch Schwerkraft nach unten in den Kondensatauffangringraum 5 und wird aus diesem über den Abfluss 6 abgeführt. Der Teilgasstrom, der den Tropfenabscheider 4 passiert hat, wird in die Atmosphäre abgegeben.

Bei dem in Figur 1 dargestellten Ringabscheider 4 sind die einzelnen Tropfenabscheiderlamellen radial und vertikal angeordnet. Der Tropfenabscheider wird in Vertikalrichtung durchströmt. Figur 2 zeigt eine Ausführungsform, bei der der Ringabscheider 4 horizontal durchströmt wird. Auch die in Figur 2 dargestellte Kondensatradfilmauffang- und ableitvorrichtung besitzt ein Trennelement 2, einen zwischen Kaminwand 9 und Trennelement 2 gebildeten Ringraum7, einen nachfolgenden erweiterten Ringraum 8, einen Kondensatauffangringraum 5 und einen Kondensatabfluss 6. Vom Ringraum 7 wird der den Kondensatrandfilm mitführende Teilgasstrom um etwas 90° in den Ringraum 8 umgelenkt und strömt von dort horizontal in den Ringabscheider 4. Dieser weist radial und vertikal angeordnete Tropfenabscheiderlamellen auf, die sich zwischen einer oberen und einer unteren Begrenzungswand erstrecken. Sie werden horizontal durchströmt, wie durch den Pfeil angedeutet. Das im Tropfenabscheider abgeschiedene Kondensat wird im Ringraum 5 aufgefangen und über den Abfluss 6 abgeführt. Vom Ringabscheider 4 gelangt der Teilgasstrom in die Atmosphäre.

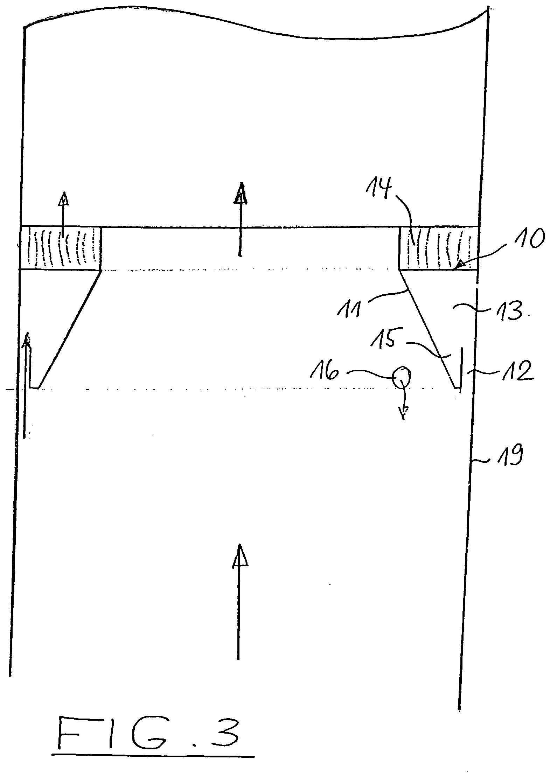

Figur 3 zeigt einen schematischen Vertikalschnitt durch einen Nasskamin, wobei bei dieser Ausführungsform eine Kondensatrandfilmauffang- und -ableitvorrichtung 10 im Inneren des Nasskamins und nicht an dessen Mündung angeordnet ist. Die Kondensatrandfilmauffang- und -ableitvorrichtung 10 weist auch bei dieser Ausführungsform ein ringförmiges Trennelement 11 auf, das sich in Gasströmungsrichtung in Figur 3 von unten nach oben konisch verengt. Das Trennelement 11 ist im unteren Teil nach oben umgelenkt und weist einen parallel zur Kaminwand 19 verlaufenden Abschnitt auf, der mit der Kaminwand einen Ringraum 12 begrenzt. Der Ringraum 12 erweitert sich nach oben zu einem breiteren Ringraum 13, hinter dem ein als Ringabscheider ausgebildeter Tropfenabscheider 14 angeordnet ist. Im Kamininneren können mehrere der in Figur 3 dargestellten Tropfenabscheiderrandfilmauffang- und -ableitvorrichtungen in Gasströmungsrichtung hintereinander angeordnet sein.

Durch das Trennelement 11 wird vom Gasstrom ein Teilgasstrom abgeteilt, der in den Ringraum 12 eindringt und dabei den an der Innenseite der Kaminwand 19 gebildeten Kondensatrandfilm mitführt. Der Teilgasstrom gelangt dann in den erweiterten Ringraum 13 und von dort in den Ringabscheider 14. Dieser weist eine Vielzahl von radial und vertikal angeordneten wellenförmigen und mit Fangnasen versehenen Tropfenabscheiderlamellen auf. Der Teilgasstrom passiert den Ringabscheider 14, wobei das mitgeführte Kondensat abgeschieden und in einem Kondensatauffangringraum 15 aufgefangen wird, der zwischen dem unteren Teil des Trennelementes 11 sowie dessen parallel zur Kaminwand verlaufenden Abschnitt gebildet wird. Von dort wird das Kondensat über eine schematisch bei 16 dargestellte Drainage abgeführt. Der Teilgasstrom, der den Ringabscheider 14 passiert hat, vereinigt sich dann wieder mit dem Hauptgasstrom des Nasskamins.

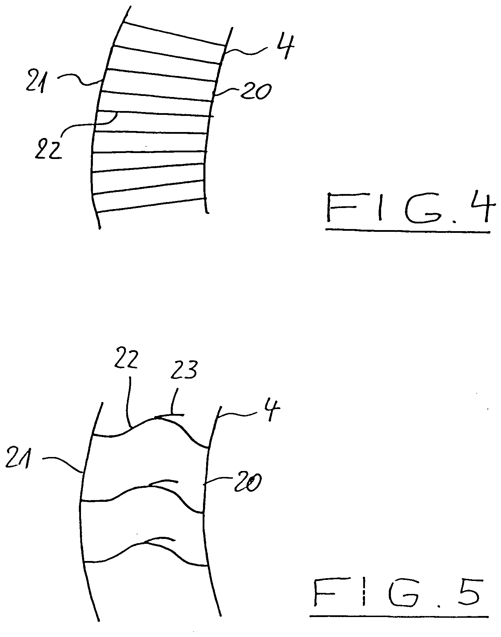

Figur 4 zeigt eine schematische Draufsicht auf einen Teil des als Ringabscheider ausgebildeten Tropfenabscheiders 4. Der Abscheider weist eine Vielzahl von radial angeordneten wellenförmigen Tropfenabscheiderlamellen 21 auf, die mit Fangnasen versehen sind. Derartige Lamellen sind bekannt, so dass Ihre Konstruktion hier im Einzelnen nicht beschrieben werden muss. Der Abstand zwischen den Lamellen 22 ist radial außen größer als radial innen. Die Lamellen erstrecken sich zwischen einer Außenwand 21 und einer Innenwand 20, die bei der Ausführungsform der Figur 1 vom Trennelement 2 und der äußeren Begrenzungswand 3, bei der Ausführungsform der Figur 2 von dem um 90° umgelenkten Trennelement 2 und einer unteren Begrenzungswand und bei der Ausführungsform der Figur 3 von einem zur Kaminwand parallelen Abschnitt des Trennelementes 11 und einer an der Kaminwand angeordneten äußeren Begrenzungswand gebildet werden.

Figur 5 zeigt eine größere Darstellung des Tropfenabscheiderabschnittes der Figur 4. Man erkennt die einzelnen wellenförmigen Lamellen 22 mit entsprechenden Fangnasen 23. Der dargestellte Abscheider wird vertikal durchströmt.

## Patentansprüche

1. Rohr zur Durchführung oder Abführung von nassen Gasen, insbesondere zur Durchführung oder Abführung von einer Nasswäschung unterzogenen Rauchgasen, mit einer Kondensatrandfilmauffang- und -ableitvorrichtung (1, 10), die ein im Bereich des Innenrandes des Rohres angeordnetes Trennelement (2, 11) zur Abtrennung eines Teilgasstromes von dem das Rohr durchströmenden Gasstrom und eine zugehörige Kondensatabführvorrichtung aufweist, wobei die Kondensatrandfilmauffang- und -ableitvorrichtung (1, 10) in ihrer vom abgetrennten Teilgasstrom durchströmten Bahn einen vom Teilgasstrom durchströmten Tropfenabscheider (4, 14) aufweist,
wobei der Tropfenabscheider (4, 14) als Ringabscheider ausgebildet ist,
wobei der Ringabscheider eine Vielzahl von radial angeordneten Tropfenabscheiderlamellen (22) aufweist, die sich zwischen einer radial inneren und radial äußeren bzw. oberen und unteren Begrenzungswand (20, 21) erstrecken,
wobei die Kondensatrandfilmauffang- und -ableitvorrichtung (1, 10) einen zwischen Trennelement (2, 11) und Rohrwandung (9, 19) ausgebildeten Ringraum (7, 12) aufweist, der sich in Gasströmungsrichtung zu einem größeren Ringraum (8, 13) erweitert, an dessen Ende der Tropfenabscheider (4, 14) angeordnet ist.

2. Rohr nach Anspruch 1, **dadurch gekennzeichnet, dass** die Kondensatrandfilmauffang- und -ableitvorrichtung (1) an der Rohrmündung angeordnet ist.

3. Rohr nach Anspruch 1, **dadurch gekennzeichnet, dass** die Kondensatrandfilmauffang- und -ableitvorrichtung (10) im Rohrinneren angeordnet ist.

4. Rohr nach einem der vorangehenden Ansprüche, **dadurch gekennzeichnet, dass** der Ringabscheider so in der Kondensatrandfilmauffang- und -ableitvorrichtung (1, 10) angeordnet ist, dass er vom abgetrennten Gasstrom vertikal durchströmt wird.

5. Rohr nach einem der Ansprüche 1-3, **dadurch gekennzeichnet, dass** der Ringabscheider so in der Kondensatrandfilmauffang- und -ableitvorrichtung (1) angeordnet ist, dass er vom abgetrennten Gasstrom horizontal durchströmt wird.

6. Rohr nach einem der vorangehenden Ansprüche, **dadurch gekennzeichnet, dass** der Ringabscheider zwischen Rohrwandung (19) und Trennelement (11) bei Anordnung der Kondensatrandfilmauffang- und -ableitvorrichtung (10) im Rohrinneren oder zwischen Trennelement (2) und einem Gasstrombahnbegrenzungselement (3) bei Anordnung der Kondensatrandfilmauffang- und -ableitvorrichtung (1) an der Rohrmündung angeordnet ist.

7. Rohr nach einem der vorangehenden Ansprüche, **dadurch gekennzeichnet, dass** das Trennelement (11) konisch ausgebildet ist und sich in Gasströmungsrichtung verengt.

8. Rohr nach einem der vorangehenden Ansprüche, **dadurch gekennzeichnet, dass** die Kondensatabführvorrichtung eine Kondensatauffangwanne (5, 15) mit Abfluss (6, 16) aufweist.

9. Rohr nach einem der vorangehenden Ansprüche, **dadurch gekennzeichnet, dass** es als Nasskamin ausgebildet ist.

10. Kondensatrandfilmauffang- und -ableitvorrichtung zum Einbau in ein Rohr nach einem der vorangehenden Ansprüche.

## Claims

1. A pipe for passing or discharging wet gases, especially for passing or discharging flue gases submitted to a scrubbing process, comprising a condensate edge film reception and discharge device (1,10) including a separation member (2,11) for separating a part-gas stream from the gas stream passing the pipe which is arranged in the range of the inner edge of the pipe, and an associated condensate discharge device, wherein the condensate edge film reception and discharge device (1,10), in its path passed by the separated part-gas stream, includes a droplet separator (4,14) passed by the part-gas stream,
wherein the droplet separator (4,14) is formed as annular separator,
wherein the annular separator has a plurality of radially arranged droplet separator lamellas (22) extending between a radially inner and a radially outer or upper and lower limiting wall (20,21),
wherein the condensate edge film reception and discharge device (1,10) includes an annular space (7,12) formed between the separation member (2, 11) an the pipe wall (9,19) and expanding in gas flow direction to a larger annual space (8,13) at the end of which the droplet separator (4,14) is disposed.

2. The pipe according to claim 1, **characterised in that** the condensate edge film reception and discharge device (1) is arranged at the orifice of the pipe.

3. The pipe according to claim 1, **characterised in that** the condensate edge film reception and discharge device (10) is arranged in the interior of the pipe.

4. The pipe according to one of the preceding claims, **characterised in that** the angular separator is arranged in the condensate edge film reception and discharge device (1,10) in such a manner that it is vertically flown through by the separated gas stream.

5. The pipe according to one of the claims 1 - 3, **characterised in that** the annular separator is arranged in the condensate edge film reception and discharge device (1) in such a manner that it is horizontally flown through by the separated gas stream.

6. The pipe according to one of the preceding claims, **characterised in that** the annular separator is disposed between the pipe wall (19) and the separation member (11) when the condensate edge film reception and discharge device (10) is arranged in the interior of the pipe or between the separation member (2) and a gas flow path limiting member (3) when the condensate edge film reception and discharge device (1) is arranged at the opening of the pipe.

7. The pipe according to one of the preceding claims, **characterised in that** the separation member (11) is formed conically and narrows in gas flow direction.

8. The pipe according to one of the preceding claims, **characterised in that** the condensate discharge device includes a condensate reception trough (5,15) with drain (6,16).

9. The pipe according to one of the preceding claims, **characterised in that** it is designed as wet chimney.

10. A condensate edge film reception and discharge device for the installation in a pipe according to one of the preceding claims.

## Revendications

1. Conduit pour acheminer ou évacuer des gaz humides, en particulier pour acheminer ou évacuer des gaz de fumée soumis à un lavage humide, avec un dispositif de collecte et d'évacuation d'un film marginal de condensat (1, 10), qui présente un élément de séparation (2, 11) agencé dans la zone du bord intérieur du conduit pour la séparation d'un flux de gaz partiel du flux de gaz traversant le conduit et un dispositif d'évacuation de condensat associé, dans lequel le dispositif de collecte et d'évacuation d'un film marginal de condensat (1, 10) présente dans sa voie traversée par le flux de gaz partiel séparé, un pare-gouttes (4, 14) traversé par le flux de gaz partiel,
dans lequel le pare-gouttes (4, 14) est réalisé en tant que séparateur annulaire,
dans lequel le séparateur annulaire présente une pluralité de lamelles pare-gouttes agencées radialement (22), qui s'étendent entre une paroi de délimitation radialement intérieure et radialement extérieure ou supérieure et inférieure (20, 21),
dans lequel le dispositif de collecte et d'évacuation d'un film marginal de condensat (1, 10) présente un espace annulaire (7, 12) réalisé entre un élément de séparation (2, 11) et une paroi de conduit (9, 19), qui s'élargit dans le sens d'écoulement de gaz en un espace annulaire plus grand (8, 13), à l'extrémité duquel le pare-gouttes (4, 14) est agencé.

2. Conduit selon la revendication 1, **caractérisé en ce que** le dispositif de collecte et d'évacuation d'un film marginal de condensat (1) est agencé au niveau de l'embouchure de conduit.

3. Conduit selon la revendication 1, **caractérisé en ce que** le dispositif de collecte et d'évacuation d'un film marginal de condensat (10) est agencé à l'intérieur du conduit.

4. Conduit selon l'une quelconque des revendications précédentes, **caractérisé en ce que** le séparateur annulaire est agencé dans le dispositif de collecte et d'évacuation d'un film marginal de condensat (1, 10), de sorte qu'il est traversé verticalement par le flux de gaz séparé.

5. Conduit selon l'une quelconque des revendications 1-3, **caractérisé en ce que** le séparateur annulaire est agencé dans le dispositif de collecte et d'évacuation d'un film marginal de condensat (1), de sorte qu'il est traversé horizontalement par le flux de gaz séparé.

6. Conduit selon l'une quelconque des revendications précédentes, **caractérisé en ce que** le séparateur annulaire est agencé entre une paroi de conduit (19) et un élément de séparation (11) lors de l'agencement du dispositif de collecte et d'évacuation d'un film marginal de condensat (10) à l'intérieur du conduit ou entre un élément de séparation (2) et un élément de délimitation de voie de flux de gaz (3) lors de l'agencement du dispositif de collecte et d'évacuation d'un film marginal de condensat (1) à l'embouchure de conduit.

7. Conduit selon l'une quelconque des revendications précédentes, **caractérisé en ce que** l'élément de séparation (11) est réalisé de manière conique et se rétrécit dans le sens d'écoulement de gaz.

8. Conduit selon l'une quelconque des revendications précédentes, **caractérisé en ce que** le dispositif d'évacuation de condensat présente une cuve de collecte de condensat (5, 15) avec écoulement (6, 16).

9. Conduit selon l'une quelconque des revendications précédentes, **caractérisé en ce qu'**il est réalisé en tant que cheminée humide.

10. Dispositif de collecte et d'évacuation d'un film marginal de condensat à implanter dans un conduit selon l'une quelconque des revendications précédentes.
